# FASCICULE DE BREVET EUROPEEN

(11) **EP 3 840 286 B1**
(45) Date de publication et mention de la délivrance du brevet: **14.05.2025**
(21) Numéro de dépôt: 20214774.0
(22) Date de dépôt: 16.12.2020
(51) Int. Cl.: H04L 9/32, H04L 9/08

(54) **PLATEFORME SECURISEE, DECENTRALISEE, AUTOMATISEE ET MULTI-ACTEURS DE GESTION D'IDENTITES D'OBJETS AU TRAVERS DE L'UTILISATION D'UNE TECHNOLOGIE DE CHAINE DE BLOCS**
GESICHERTE DEZENTRALE AUTOMATISIERTE PLATTFORM MIT MEHREREN BETEILIGTEN ZUR VERWALTUNG VON OBJEKTIDENTITÄTEN DURCH DEN EINSATZ VON BLOCKCHAIN-TECHNOLOGIE
DECENTRALISED, AUTOMATED AND MULTI-PLAYER SECURE PLATFORM FOR MANAGING IDENTITIES OF OBJECTS THROUGH THE USE OF BLOCKCHAIN TECHNOLOGY

(30) Priorité: 16.12.2019 FR 1914486
(43) Date de publication de la demande: 23.06.2021
(73) Titulaire: Bull SAS, 78340 Les Clayes-sous-Bois (FR)
(72) Inventeur: HÉBERT, Guillaume, 69003 Lyon (FR); LEPORINI, David, 94150 Rungis (FR)
(74) Mandataire: IPAZ

(56) Documents cités:
- US-A1- 2019 222 424
- WON JONGHO ET AL: "Decentralized Public Key Infrastructure for Internet-of-Things", MILCOM 2018 - 2018 IEEE MILITARY COMMUNICATIONS CONFERENCE (MILCOM), IEEE, 29 October 2018 (2018-10-29), pages 907 - 913, XP033489288, DOI: 10.1109/MILCOM.2018.8599710

## Description

### DOMAINE TECHNIQUE DE L'INVENTION

La présente invention concerne de manière générale le domaine de la Gestion des Identités et des Accès, et plus particulièrement à l'accès automatisé par des objets, de manière sécurisée, à des services numériques, et la protection des échanges qui s'en suivent.

### ETAT DE LA TECHNIQUE ANTERIEURE

Nous sommes aujourd'hui dans un contexte de plein essor de l'internet des objets (IoT) et de sécurisation de ces objets. Une estimation du marché donne le chiffre de 30 milliards comme nombre d'objets connectés à l'IoT d'ici 2020. C'est pourquoi il est donc important de trouver des solutions IoT répondant au besoin de scalabilité pour répondre à la demande, mais également aux aspects de sécurité pour se prémunir des cyberattaques. Les besoins de sécurité associés aux communications des objets (confidentialité, intégrité, authentification et non répudiation) sont couverts par l'utilisation de mécanismes cryptographiques qui se basent sur des jeux de clés et d'identités numériques. Ce gestionnaire de clés et d'identités représente ainsi le cœur de la sécurité du système. Du point de vue des objets, c'est grâce à ce gestionnaire que l'objet est autorisé à émettre sur un réseau et d'accéder à un service applicatif (identification et authentification de l'objet), qu'il est capable d'émettre des messages chiffrés, intègres et authentifiés et qu'il est capable de déchiffrer les données reçues (cryptographie symétrique/asymétrique).

L'accès automatisé par des objets, de manière sécurisée, à des services numériques, et la protection des échanges qui s'en suivent, nécessitent la mise en place de processus d'enrôlement à la fois pour les fabricants d'objets et pour les objets eux-mêmes, ainsi que leur association aux services numériques en question (« service on-boarding »).

Ces processus doivent répondre aux problématiques telles que l'identification des objets avec une liste d'attributs associés (incluant notamment des identifiants de sécurité tels que des clés cryptographiques), et leur enregistrement dans un référentiel du Fabricant des objets; Le transfert de la propriété et/ou des droits d'exploitation d'un objet d'un Fabricant à un utilisateur de l'objet (par exemple un fournisseur de service utilisant l'objet) ; Le transfert de la propriété et/ou des droits d'exploitation d'un utilisateur à un autre (cas, par exemple, du besoin de réversibilité) ; La mise à jour des attributs liés à l'identité de l'objet par le propriétaire d'un objet et/ou l'entité en charge de ses droits d'exploitation.

De plus, les plateformes qui répondent à ces processus doivent montrer une haute résilience aux pannes, une haute disponibilité et une forte sécurité.

Avec l'essor des objets connectés (IoT), et particulièrement des objets IoT de petite taille et de faible coût, de nouvelles contraintes, propres à ceux-ci, émergent, telle qu'une taille de mémoire réduite, une faible puissance de calcul, une basse consommation et un possible mode hors ligne ou une déconnexion de l'objet.

A toutes ces contraintes techniques s'ajoutent des contraintes légales grandissantes, telles que les nouvelles réglementations en vigueur sur la propriété des données (GDPR) et le Privacy by Design (PvD).

Il existe aujourd'hui plusieurs solutions pour répondre à ces problématiques, à voir les solutions de GIA (Gestion des Identités et des Access) plus communément appelées IAM (Identity Access Management). De nombreuses sociétés de cybersécurité offrent de telles solutions : Active Directory, IBM Security Identity and Access Assurance, Oracle Identity Cloud Service, Okta, Centrify, RSA SecurID Access, Keeper Security, SailPoint, OneLogin, Ping... Néanmoins les différents acteurs de cette liste proposent des solutions centralisées, avec un stockage de données interne qui peut avoir un caractère personnel donc sensible et ainsi ne plus respecter la réglementation GDPR.

Par exemple, le document US 2019/222424 A1 décrit un système permettant de lier des réclamations vérifiables. Un tel système comprend :
- un dispositif client ;
- un authentificateur du dispositif client pour stocker de manière sécurisée des données d'authentification comprenant une ou plusieurs attestations vérifiables reçues d'un ou de plusieurs fournisseurs d'attestation, des attributs étant associés à chaque attestation vérifiable ; et
- une logique de traitement d'attestation/attribut permettant de générer une première liaison d'attestation vérifiable pour une première attestation vérifiable émise par le fournisseur d'attestation ;
l'authentificateur devant transmettre une première affirmation de signature à une première partie utilisatrice afin de s'authentifier auprès de la première partie utilisatrice, la première affirmation de signature comprenant une extension d'attribut contenant des données associées à la première liaison d'attestation vérifiable.

Ces solutions proposent généralement un processus technique centralisé habituellement géré par le fournisseur de services ce qui ne permet pas une automatisation, et des accords bipartites préalables entre les fournisseurs de services et les fabricants d'objets, nécessaire pour permettre l'association des objets aux services du fournisseur.

L'objet est déjà enregistré et « appairé avec son Manufacturer / Owner ».

### EXPOSE DE L'INVENTION

La présente invention a donc pour objet de proposer un procédé de communication pour la gestion sécurisée de clés et d'identités, permettant de palier au moins une partie des inconvénients de l'art antérieur.

**Ce** but est atteint par un procédé de communication pour la gestion sécurisée de clés et d'identités d'un Objet fabriqué par un Fabricant possédant une bi-clé clé publique Kp, clé privée ou secrète Ks de Fabricant (Ksₘₐₙ, Kpₘₐₙ) et un client possédant une bi-clé Client (Ks_{client}, Kp_{client}), caractérisé en ce que la gestion se fait au moins partiellement sur une base de données décentralisée de chaines de blocs, et que le procédé comprend les étapes suivantes :
a) Génération par le Fabricant d'une bi-clé de fabrication (Ks_{fab},Kp_{fab}) obtenue via une fonction de dérivation de clé, la bi-clé de fabrication étant enregistrée dans l'objet, et composé d'une clé privée de fabrication (Ks_{fab}) issue de la dérivation de la clé privée du Fabricant (Ksₘₐₙ) avec un diversifiant (DIV), et d'une clé publique de fabrication (Kp_{fab}) complémentaire de ladite clé privée (Ks_{fab}), la clé publique (Kp_{fab}) étant issue de la dérivation de la clé publique du Fabricant (Kpₘₐₙ) avec le même diversifiant (DIV).
b) Publication et enregistrement dans la chaine de blocs de l'identifiant décentralisé (decentralized Identifier, DID) comprenant la clé publique Kp_{fab} de l'objet et préférentiellement du diversifiant (DIV) utilisé pour obtenir la clé publique Kp_{fab} de l'objet : *association DID-DIV.*
Et, lorsqu'un Client achète l'objet audit Fabricant, le procédé comprend les étapes d'initialisation suivantes :
c) Fourniture par le Fabricant de l'objet, de l'identifiant de l'objet DID comprenant la clé publique de fabrication Kp_{fab} au client.
d) Mise à jour de la chaine de blocs par publication de la clé publique du client Kp_{client} et création de l'association dans ladite base de donnée entre le DID et le DIV et Kp_{client}
Et, lorsque l'objet est allumé pour la première fois, l'objet s'enrôle selon les étapes suivantes :
e) Génération d'une bi-clé d'utilisation (Ksᵤₜᵢₗ, Kpᵤₜᵢₗ), la génération étant de préférence réalisée à partir d'un aléa généré par l'objet lui-même.
f) Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
g) Remplacement dans la chaine de blocs de la clé publique de fabrication associée au DID de l'objet par la clé publique d'utilisation associée au DID de l'objet.

**Selon** une particularité, le générateur de bi-clés repose sur des portemonnaies de clé hiérarchiques (Hierarchical Key Wallets) pour fournir les bi-clés de fabrication uniques qui sont diversifiées à partir de la bi-clé du Fabricant.

**Selon** une autre particularité, l'objet est transféré d'un propriétaire à un autre en reprenant les étapes d à g.

Selon une autre particularité, le procédé comprend en outre une étape préalable à la génération de bi-clés de fabrication par le Fabricant, dans laquelle ledit Fabricant enregistre son identifiant de Fabricant dans la base de données de chaines de blocs et publie leur clé publique de Fabricant (Kpₘₐₙ) en l'associant à l'identifiant du Fabricant.

Selon une autre particularité, le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

Selon une autre particularité, un système de Preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

La présente invention concerne aussi un système de gestion d'identités sécurisées basé sur une chaine de bloc apte à réaliser les étapes d'un processus réalisant :
- L'identification des objets avec une liste d'attributs associés, incluant notamment des identifiants de sécurité tels que des clés cryptographiques, et leur enregistrement dans un référentiel du Fabricant ;
- Le transfert de la propriété et/ou des droits d'exploitation d'un objet d'un Fabricant à un utilisateur de l'objet, par exemple un fournisseur de service utilisant l'objet, par l'enregistrement des nouvelles identités associées à l'objet;
- Le transfert de la propriété et/ou des droits d'exploitation d'un utilisateur à un autre, par l'enregistrement des nouvelles identités associées à l'objet ;
- La mise à jour des attributs liés à l'identité de l'objet par le propriétaire d'un objet et/ou l'entité en charge de ses droits d'exploitation.

**La** présente invention concerne aussi une base de donnée, utilisée par le système de gestion d'identités sécurisées basé sur une chaine de bloc, implémenté sur une plateforme sécurisée, décentralisée, automatisée et multi-acteurs de gestion d'identités d'objets au travers de l'utilisation de la technologie de chaîne de blocs mise en œuvre sur plusieurs nœuds du système avec lesquels la plateforme communique , les nœuds étant responsables du maintien de la chaine de blocs et permettent aux acteurs (et aux objets) de consulter l'état de cette chaine et d'interagir avec cette chaine par l'intermédiaire d'un référentiel (ou registre) commun partagé , chaque nœud ayant accès à un module cryptographique, de préférence physique, en charge du stockage sécurisé de sa clé privée et de l'accès au registre partagé caractérisée en ce que la base de données constitue un référentiel pour chaque fabricant contenant une liste d'attributs associés (incluant notamment des identifiants de sécurité tels que des clés cryptographiques) et soit réalisant leur enregistrement dans le référentiel du Fabricant, soit réalisant la mise à jour des attributs liés à l'identité de l'objet par le propriétaire d'un objet et/ou l'entité en charge de ses droits d'exploitation.

**La** présente invention concerne aussi une plateforme sécurisée, décentralisée, automatisée et multi-acteurs de gestion d'identités d'objets utilisant une base de données, caractérisée en ce qu'elle gère :
- Le transfert de la propriété et/ou des droits d'exploitation d'un objet ;
- L'enregistrement de preuves de possession d'objet dans le référentiel partagé ;
- L'activation / réactivation d'objets ;

Selon une particularité, la technologie de la chaine de bloc utilisée ne doit pas être d'un type précis et comprend au moins :
- un système de permission, pour identifier et authentifier fortement un acteur ;
- un système de contrôle d'accès, basé sur les identités des utilisateurs ;
- un mécanisme d'anti-rejeu ,

Chaque nœud maintenant la chaîne de blocs devant se trouver dans un environnement sécurisé, et l'identité publique de chaque nœud doit être mise à disposition des autres nœuds et acteurs au sein du registre partagé; l'exécution de Smart Contract et de fonctions sur la chaine de blocs étant effectuée dans cette sphère sécurisée, l'enregistrement ayant pour finalité de créer un lien, accessible par tout le monde dans la chaine de blocs, pour permettre de faire correspondre l'acteur et son identité digitale par une bi-clé, clé publique et clé privée, ou par un certificat éventuellement signé par un organisme certifié de gestion d'identités.

**La** présente invention concerne aussi un système de gestion d'identités sécurisées basé sur une chaine de bloc et apte à réaliser les étapes d'un procédé de communication pour la gestion sécurisée de clés et d'identités, le système comprenant au moins :
Un Fabricant, utilisant un système de diversification de clé à partir de diversifiants générés par un générateur de diversifiants, un système de connexion à une chaine de blocs, un système d'attribution à chaque objet sorti de fabrication d'un identifiant et un arrangement matériel et logiciel pour envoyer au serveur de chaine de blocs un message de publication et d'enregistrement de la clé publique du client Kp_{client} et de *l'association dans ladite base de donnée entre le DID et le DIV.*

**La** présente invention concerne aussi un système de gestion d'identités sécurisées basé sur une chaine de bloc et apte à réaliser les étapes d'un procédé de communication pour la gestion sécurisée de clés et d'identités, le système comprenant au moins :
- Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
   - Génération d'une bi-clé d'utilisation (Ksᵤₜᵢₗ, Kpᵤₜᵢₗ) , la génération étant réalisée de préférence à partir d'un aléa,
   - Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
   - Remplacement dans la chaine de blocs de la clé publique de fabrication par la clé publique d'utilisation

La présente invention concerne aussi un système de gestion d'identités d'un fournisseur de service d'identité (ID service provider) mettant en œuvre une chaîne de blocs « block-chain » et utilisant les objets enregistrés sur un réseau pour remplir des services applicatifs (SA) dans lesquels les informations fournies par les objets sont utilisées, chaque nœud du réseau du fournisseur de service d'identité a accès à un module cryptographique en charge du stockage sécurisé de la clé privée dudit nœud, les nœuds possédant des client appelés Acteurs ayant chacun leur propre identité ID_{act} enregistrée dans la chaine de bloc, chaque fabricant d'objet est enregistré dans la chaîne de blocs « block-chain » du fournisseur de service d'identité et les clés publiques de fabrication des fabricants sont connues de tous, pour chaque objet vendu ou transféré, chaque fabricant fournit l'identifiant de l'objet et un diversifiant utilisé par le fabricant (DID, DIV) pour le calcul des bi-clés de fabrication de chaque objet par le fabricant, et seul l'identifiant de l'objet et la clé publique de fabrication sont publiés dans la chaîne de bloc « block-chain », seule la clé privée de fabrication reste stockée en dehors de la chaîne, en l'occurrence dans l'objet ;
- Chaque objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
   - Génération dans l'objet d'une bi-clé d'utilisation (Ksᵤₜᵢₗ, Kpᵤₜᵢₗ), la génération étant de préférence réalisée à partir d'un aléa généré par l'objet lui-même.
   - Auto-enrôlement grâce à la Bi-clé d'utilisation par publication par l'objet de sa clé publique d'utilisation (Kpᵤₜᵢₗ), et signature de la transaction avec la clé privée de fabrication (Ks_{fab})
   - Remplacement de la clé publique de fabrication par la clé publique d'utilisation par mise à jour de la chaine de blocs.

**La** présente invention concerne aussi un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
- Génération d'une bi-clé d'utilisation (Ksᵤₜᵢₗ, Kpᵤₜᵢₗ) , la génération étant de préférence réalisée à partir d'un aléa généré par l'objet lui-même.
- Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
- Remplacement de la clé publique de fabrication par la clé publique d'utilisation par mise à jour de la chaine de blocs.

### BREVE DESCRIPTION DES FIGURES

D'autres caractéristiques, détails et avantages de l'invention ressortiront à la lecture de la description qui suit en référence aux figures annexées, qui illustre :
- [Fig. 1], représente un mode de réalisation du procédé de façon schématique.
- [Fig. 2], représente les étapes a) et b) du procédé selon certains modes de réalisation,
- [Fig. 3], représente les étapes c) et d) du procédé selon certains modes de réalisation,
- [Fig. 4], représente, les étapes e), f), et g) du procédé selon certains modes de réalisation,

### DESCRIPTION DETAILLEE DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

**De** manière générale, la présente invention comporte un procédé de communication pour la gestion sécurisée de clés et d'identités d'un Objet fabriqué par un Fabricant possédant une bi-clé clé publique Kp, clé privée ou secrète Ks de Fabricant (Ksₘₐₙ, Kpₘₐₙ) et un client possédant une bi-clé Client (Ks_{client}, Kp_{client}), caractérisé en ce que la gestion se fait au moins partiellement sur une base de données décentralisée de chaines de blocs, et que le procédé comprend les étapes suivantes :
a) Génération par le Fabricant d'une bi-clé de fabrication (Ks_{fab},Kp_{fab}) obtenue via une fonction de dérivation de clé, la bi-clé de fabrication étant enregistrée dans l'objet, et composé d'une clé privée de fabrication (Ks_{fab}) issue de la dérivation de la clé privée du Fabricant (Ksₘₐₙ) avec un diversifiant (DIV), et d'une clé publique de fabrication (Kp_{fab}) complémentaire de ladite clé privée (Ks_{fab}), la clé publique (Kp_{fab}) étant issue de la dérivation de la clé publique du Fabricant (Kpₘₐₙ) avec le même diversifiant (DIV).
b) Publication et enregistrement dans la chaine de blocs de l'identifiant décentralisé (decentralized Identifier, DID) de l'objet et préférentiellement du diversifiant (DIV) utilisé pour obtenir la clé publique Kp_{fab} de l'objet : association DID-DIV.
Et, lorsqu'un Client achète l'objet audit Fabricant, le procédé comprend les étapes d'initialisation suivantes :
c) Fourniture par le Fabricant de l'objet, de l'identifiant de l'objet DID, **et** de la clé publique de fabrication Kp_{fab} au client,
d) Mise à jour de la chaine de blocs par publication de la clé publique du client Kp_{client} et création de *l'association dans ladite base de donnée entre le DID et le DIV et Kp_{client}*
Et, lorsque l'objet est allumé pour la première fois, l'objet s'enrôle selon les étapes suivantes :
e) Génération d'une bi-clé d'utilisation (Ksᵤₜᵢₗ, Kpᵤₜᵢₗ), la génération étant de préférence réalisée à partir d'un aléa généré par l'objet lui-même.
f) Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
g) Remplacement dans la chaine de blocs de la clé publique de fabrication associée au DID de l'objet par la clé publique d'utilisation associée au DID de l'objet.

L'enrôlement est rendu possible car l'objet a connaissance du point d'accès de son fabricant (adresse IP et/ou passerelle...) et est en possession de la bi-clé Kfab (notamment la clé privée).

Dans certains modes de réalisation, chaque publication dans la chaine de blocs équivaut à au moins une transaction dans celle-ci

Le diversifiant DIV pourrait ne pas être publié dans la Blockchain, mais par mesure de sécurité il l'est. En effet cela permet au Fabricant de ne pas stocker la Bi-clé de fabrication, et d'être ainsi obligé de la recalculer au besoin.

Il existe une relation qui permet de faire l'association entre le DID et le DIV. Ainsi, n'importe quel acteur est ainsi capable de retrouver le DIV s'il connait le DID. Le DIV est nécessaire puisqu'il permet au fabricant de recalculer la clé : DIV pour diversifiant. Une clé diversifiée s'obtient à partir d'une clé et d'un diversifiant : la clé est connue du fabricant et le diversifiant est stockée dans la blockchain.

Avantageusement, l'objet est capable de s'auto-enrôler et signe le message d'enrôlement avec la clé de fabrication (Ks_{fab}) qu'il est le seul à posséder.

Avantageusement, le remplacement dans la chaine de blocs est réalisé par une mise à jour de la chaine de blocs (Blockchain) via une transaction. La Blockchain est comme un registre d'état : mis à jour de l'état d'une valeur, donc remplacement via une transaction. L'ancien état est gardé (paradigme blockchain) mais n'est plus à jour.

On comprend par base de données décentralisée « blockchain », ou « chaine de de blocs », une base de données décentralisée comprenant un réseau de chaines de blocs, avec des nœuds comprenant tout ou partie du registre de chaine de blocs. Avantageusement, pour garder une trace de toutes les transactions, le réseau de chaines de blocs utilise le registre à chaînes multiples qui est répliqué sur tous les nœuds homologues du réseau de chaines de blocs. La blockchain est une liste de blocs, chacun contenant plusieurs transactions. Chaque bloc a un pointeur sur le bloc précédent et l'ordre et le contenu des blocs sont protégés par des signatures de hachage. Les nœuds d'exploitation de bitcoins construisent de nouveaux blocs à partir des transactions entrantes. Cette construction est rendue difficile à réaliser et nécessite des calculs par minage considérables, la preuve du travail. Les efforts déployés rendent tout aussi difficile de changer des blocs déjà inclus dans la chaine de blocs (blockchain), d'autant plus que changer un bloc au milieu de la chaîne nécessiterait la recréation de tous les blocs suivants. Ainsi, le registre de la chaine de blocs est bien protégé des modifications et peut être considéré comme un enregistrement permanent des transactions. Afin d'inciter à l'effort de minage, les mineurs sont récompensés par les bitcoins nouvellement créés lors de la création d'un bloc. Ils reçoivent également tous les frais de transaction des transactions incluses dans le nouveau bloc.

**La** technologie de chaîne de blocs est utilisée comme un référentiel partagé et distribué d'identités incluant une liste d'attributs publics associés. Ces identités peuvent, à titre d'illustration, utilisées le format DID défini dans la spécification « Decentralized Identifiers (DIDs) »

Le système ne repose préférentiellement par sur une blockchain publique, et pas sur une blockchain avec un proof of work, qui nécessite de la puissance de calcul et de l'énergie dans un cas d'usage IoT (des objets présentant des contraintes de basse consommation et de faible puissance de calcul). Au contraire, la solution se base préférentiellement sur une blockchain de consortium / blockchain d'entreprise / blockchain à permission /blockchain POK (Proof of Knowledge, preuve de connaissance en français).

L'invention porte sur un système ou une plateforme sécurisée, décentralisée, automatisée et multi-acteurs de gestion d'identités d'objets au travers de l'utilisation d'une technologie de chaîne de blocs. En d'autres termes, sur un système de chaine de blocs afin de bénéficier de ses avantages : scalabilité, réplication, résilience aux pannes/attaques tout en ajoutant une couche supplémentaire pour l'IAM et la GIA lié à l'identité des entités.

Ces modes de réalisations n'ont donc pas besoin d'acteurs supplémentaires, de serveurs annexes, seulement les acteurs directs (Fabricant, Client, Objet), d'une base de données décentralisée blockchain, et potentiellement d'un fournisseur de service. Avantageusement, les nœuds de la chaine de blocs ne sont utilisés que pour stocker des données et les mettre à jour via des transactions effectuées sur ladite chaine de blocs.

Certaines solutions prévoient la présence d'un DM (device Manager), tandis que dans le présent système, l'enregistrement est déjà fait et l'enrôlement sur le réseau est à l'initiative de l'objet. L'objet autonome grâce au DID.

**Dans** certains modes de réalisation, la fourniture des données, notamment de l'identifiant de l'objet DID, et de la clé publique de fabrication Kp_{fab}, au client, est réalisée par une transmission « off-chain ».

On entend par une fourniture ou un envoi de données « off-chain », une fourniture ou envoi de données par un mécanisme extérieur à la chaine de blocs, de façon à améliorer la sécurité et la confidentialité de données particulièrement sensibles. On entend par là par exemple un envoi sécurisé par mail, la mise à disposition sur un serveur de stockage sécurisé, l'envoi d'une clé USB avec les données sécurisées, ou encore d'autres moyens possibles envisageables par l'Homme du métier qui répondent à la problématique donnée.

Dans certains modes de réalisation, le générateur de bi-clés repose sur des portemonnaies de clé hiérarchiques (Hierarchical Key Wallets) pour fournir les bi-clés de fabrication uniques qui sont diversifiées à partir de la bi-clé du Fabricant.

Dans certains modes de réalisation, l'objet est transféré d'un propriétaire à un autre en reprenant les étapes d à g.

Dans certains modes de réalisation, le procédé comprend en outre une étape préalable à la génération de bi-clés de fabrication par le Fabricant, dans laquelle ledit Fabricant enregistre son identifiant de Fabricant dans la base de données de chaines de blocs et publie leur clé publique de Fabricant (Kpₘₐₙ) en l'associant à l'identifiant du Fabricant.

Dans certains modes de réalisation, le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

Les Verifiable Credentials et les DID Documents (Decentralized Identifier), seront utilisés respectivement comme moyen de contrôle d'accès et de format de stockage des informations liés à l'objet sur la chaine de blocs. Le premier permettant de donner les accès en lecture aux informations de l'objet en fonction de l'identité du pair.

Dans certains modes de réalisation, dans le procédé, un système de Preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

**Le** ZPK est une méthode qui permet à une entité de prouver à une autre qu'une proposition est vraie sans en dévoiler la valeur. Cela permet, dans un souci de préservation des données, de répondre à une question sans dévoiler la valeur. Par exemple, un service peut demander à un objet si sa température est inférieure ou supérieure à 0°C sans que l'objet n'ait à dévoiler la valeur de sa température. Cela permet ainsi une optimisation sur l'utilisation du service, et non dans les étapes.

On entend par Smart Contract ou contrat intelligent un protocole/programme digitale unique et répliqué qui permet d'effectuer des opérations sur la blockchain, et que cela se fasse en respectant des règles bien définies.

Ainsi, toutes les inscriptions/publications dans la chaine de blocs passent par des Smart Contract. Les règles d'accès sont aussi régies par des Smart Contracts.

Divers modes de réalisations décrits portent aussi sur un système de gestion d'identités sécurisées basé sur une chaine de bloc.

Ainsi, dans certains modes de réalisation, un système de gestion d'identités sécurisées basé sur une chaine de blocs est apte à réaliser les étapes d'un processus réalisant :
- L'identification des objets avec une liste d'attributs associés, incluant notamment des identifiants de sécurité tels que des clés cryptographiques, et leur enregistrement dans un référentiel du Fabricant ;
- Le transfert de la propriété et/ou des droits d'exploitation d'un objet d'un Fabricant à un utilisateur de l'objet, par exemple un fournisseur de service utilisant l'objet, par l'enregistrement des nouvelles identités associées à l'objet;
- Le transfert de la propriété et/ou des droits d'exploitation d'un utilisateur à un autre, par l'enregistrement des nouvelles identités associées à l'objet ;
- La mise à jour des attributs liés à l'identité de l'objet par le propriétaire d'un objet et/ou l'entité en charge de ses droits d'exploitation.

Ainsi, il peut être mis en place un système, ou une plateforme sécurisée, décentralisée, automatisée et multi-acteurs de gestion d'identités d'objets au travers de l'utilisation d'une technologie de chaîne de blocs, permettant l'accès automatisé par des objets, de manière sécurisée, à des services numériques, et l'assurance d'une protection des échanges qui s'en suivent.

Divers modes de réalisations décrits portent aussi sur une base de données, utilisée par le système de gestion d'identités sécurisées basé sur une chaine de bloc.

Ainsi, certains modes de réalisation portent sur une base de données, utilisée par le système de gestion d'identités sécurisées basé sur une chaine de bloc, implémenté sur une plateforme sécurisée, décentralisée, automatisée et multi-acteurs de gestion d'identités d'objets au travers de l'utilisation de la technologie de chaîne de blocs mise en œuvre sur plusieurs nœuds du système avec lesquels la plateforme communique, les nœuds étant responsables du maintien de la chaine de blocs et permettent aux acteurs (et aux objets) de consulter l'état de cette chaine et d'interagir avec cette chaine par l'intermédiaire d'un référentiel (ou registre) commun partagé , chaque nœud ayant accès à un module cryptographique, de préférence physique, en charge du stockage sécurisé de sa clé privée et de l'accès au registre partagé caractérisée en ce que la base de données constitue un référentiel pour chaque fabricant contenant une liste d'attributs associés, incluant notamment des identifiants de sécurité tels que des clés cryptographiques, et soit réalisant leur enregistrement dans le référentiel du Fabricant, soit réalisant la mise à jour des attributs liés à l'identité de l'objet par le propriétaire d'un objet et/ou l'entité en charge de ses droits d'exploitation.

**Divers** modes de réalisations décrits portent aussi sur une plateforme sécurisée, décentralisée, automatisée et multi-acteurs de gestion d'identités d'objets utilisant une base de données décentralisée.

Dans certains modes de réalisation, une plateforme sécurisée, décentralisée, automatisée et multi-acteurs de gestion d'identités d'objets utilisant une base de données décentralisée gère :
- Le transfert de la propriété et/ou des droits d'exploitation d'un objet ;
- L'enregistrement de preuves de possession d'objet dans le référentiel partagé ;
- L'activation / réactivation d'objets ;

**Dans** certains modes de réalisation, la technologie de la chaine de bloc utilisée ne doit pas être d'un type précis. Dans certains modes de réalisation, la technologie de la chaine de bloc utilisée comprend au moins :
- un système de permission, pour identifier et authentifier fortement un acteur ;
- un système de contrôle d'accès, basé sur les identités des utilisateurs ;
- un mécanisme d'anti-rejeu ,
Chaque nœud maintenant la chaîne de blocs devant se trouver dans un environnement sécurisé, et l'identité publique de chaque nœud doit être mise à disposition des autres nœuds et acteurs au sein du registre partagé; l'exécution de Smart Contract et de fonctions sur la chaine de blocs étant effectuée dans cette sphère sécurisée, l'enregistrement ayant pour finalité de créer un lien, accessible par tout le monde dans la chaine de blocs, pour permettre de faire correspondre l'acteur et son identité digitale par une bi-clé, clé publique et clé privée, ou par un certificat éventuellement signé par un organisme certifié de gestion d'identités.

Une attaque par rejeu (en anglais, replay attack ou playback attack) est une forme d'attaque réseau dans laquelle une transmission est malicieusement répétée par un attaquant qui a intercepté la transmission. Il s'agit d'un type d'usurpation d'identité.

Dans certains modes de réalisation, le système comprend au moins :
Un Fabricant, utilisant un système de diversification de clé à partir de diversifiants générés par un générateur de diversifiants, un système de connexion à une chaine de blocs, un système d'attribution à chaque objet sorti de fabrication d'un identifiant et un arrangement matériel et logiciel pour envoyer au serveur de chaine de blocs un message de publication et d'enregistrement de la clé publique du client Kp_{client} et de l'association dans ladite base de donnée entre le DID et le DIV.

**L'inscription,** aussi appelée personnalisation, est faite une seule et unique fois par le fabricant. L'objet se met à jour de lui-même dans les étapes suivant la fabrication, en l'occurrence notamment lorsqu'il est acheté/cédé.

Dans certains modes de réalisation, le système comprend au moins :
- Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
   - Génération d'une bi-clé d'utilisation (Ksᵤₜᵢₗ, Kpᵤₜᵢₗ) , la génération étant réalisée de préférence à partir d'un aléa,
   - Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
   - Remplacement dans la chaine de blocs de la clé publique de fabrication par la clé publique d'utilisation.

L'enrôlement est rendu possible car l'objet a connaissance du point d'accès de son fabricant (adresse IP et/ou passerelle...) et est en possession de la bi-clé Kfab (notamment la clé privée).

Dans certains modes de réalisation, un système de gestion d'identités d'un fournisseur de service d'identité (ID service provider) met en œuvre une chaîne de blocs « block-chain » et utilise les objets enregistrés sur un réseau pour remplir des services applicatifs (SA) dans lesquels les informations fournies par les objets sont utilisées, chaque nœud du réseau du fournisseur de service d'identité a accès à un module cryptographique en charge du stockage sécurisé de la clé privée dudit nœud, les nœuds possédant des client appelés Acteurs ayant chacun leur propre identité ID_{act} enregistrée dans la chaine de bloc, chaque fabricant d'objet est enregistré dans la chaîne de blocs « block-chain » du fournisseur de service d'identité et les clés publiques de fabrication des fabricants sont connues de tous, pour chaque objet vendu ou transféré, chaque fabricant fournit l'identifiant de l'objet et un diversifiant utilisé par le fabricant (DID, DIV) pour le calcul des bi-clés de fabrication de chaque objet par le fabricant, et seul l'identifiant de l'objet et la clé publique de fabrication sont publiés dans la chaîne de bloc « block-chain », seule la clé privée de fabrication reste stockée en dehors de la chaîne, en l'occurrence dans l'objet ;
- Chaque objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
   - Génération dans l'objet d'une bi-clé d'utilisation (Ksᵤₜᵢₗ, Kpᵤₜᵢₗ), la génération étant de préférence réalisée à partir d'un aléa généré par l'objet lui-même.
   - Auto-enrôlement grâce à la Bi-clé d'utilisation par publication par l'objet de sa clé publique d'utilisation (Kpᵤₜᵢₗ), et signature de la transaction avec la clé privée de fabrication (Ks_{fab})
   - Remplacement de la clé publique de fabrication par la clé publique d'utilisation par mise à jour de la chaine de blocs.

De manière alternative, il serait possible, mais moins sûr, d'envoyer les nouveaux diversifiants directement au Smart Contract qui les chiffre avec la clé publique du client.

Dans certains modes de réalisation, un objet est pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
- Génération d'une bi-clé d'utilisation (Ksᵤₜᵢₗ, Kpᵤₜᵢₗ) , la génération étant de préférence réalisée à partir d'un aléa généré par l'objet lui-même.
- Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
- Remplacement de la clé publique de fabrication par la clé publique d'utilisation par mise à jour de la chaine de blocs

On comprend qu'il est décrit tout au long de cette description un système de gestion automatisée des Identités et des Accès au travers de l'utilisation d'une technologie de chaine de blocs.

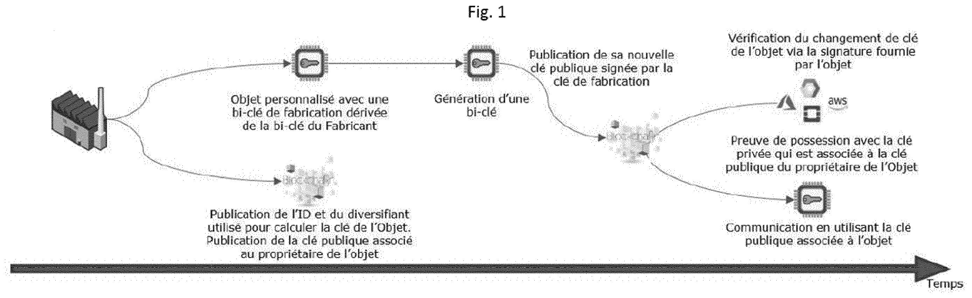

Dans certains modes de réalisation, et en résumé, les fabricants sont enregistrés dans la Blockchain, et leurs clés publiques respectives sont connues de tous. Ils fabriquent et personnalisent des Objets avec des identifiants et des clés de fabrication. Pour chaque objet, ils publient dans la Blockchain l'identifiant, et le diversifiant utilisés pour calculer la clé de fabrication. Les objets sont capables de s'auto-enrôler et de changer de clés par génération de leurs propres clés. Le changement de clé est permis/validé grâce à la clé privée de fabrication que seul l'objet possède et utilise. Les fournisseurs de services peuvent vérifier via la Blockchain que l'Objet a bien changé de clé. Cette vérification de la signature du changement n'a pu être faite que par l'objet seul connaisseur de la clé de fabrication. La figure 1 illustre ainsi cela à titre d'exemple et de manière non limitative.

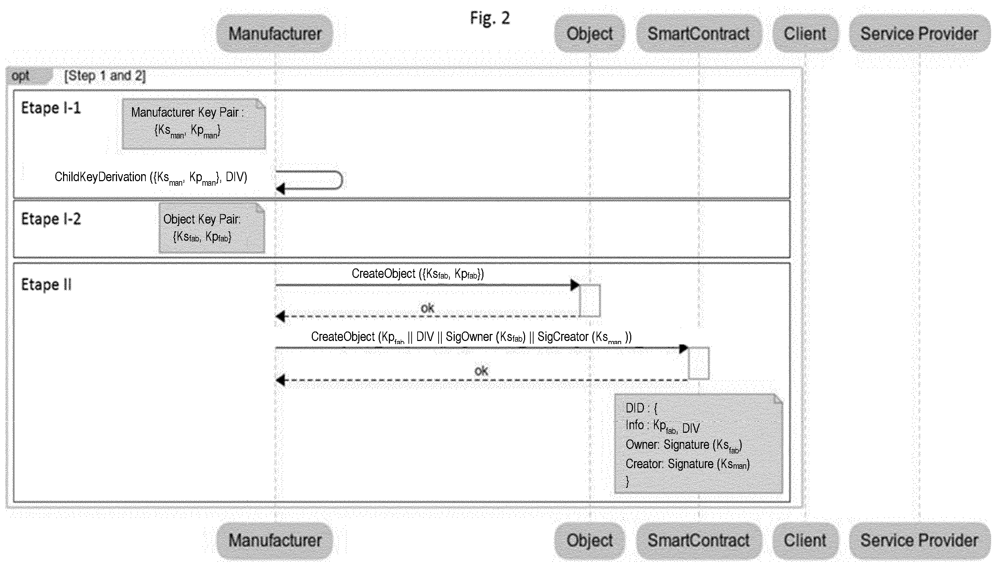

Plus particulièrement, la figure 2 illustre un exemple de mode de réalisation non limitatif de la présente invention, dans lequel sont représentées les étapes a) et b). L'étape a) concerne la génération de la bi-clé de fabrication (Ks_{fab},Kp_{fab}) obtenue via une fonction de dérivation de clé utilisant un diversifiant (DIV) à partir de la bi-clé du Fabricant (Ksₘₐₙ, Kpₘₐₙ) (Etape I-1), et la personnalisation de l'objet (l'objet est mis en connaissance du point d'accès de son fabricant (adresse IP et/ou passerelle...) et en possession de la bi-clé Kfab (Etape I-2)). L'étape b) concerne la publication et l'enregistrement dans la chaine de blocs du DID et du DIV (Etape II). Ainsi le script avec une double signature permet de différencier le propriétaire de l'objet de celui qui a créé l'objet. Cela permet également de contrôler que celui qui écrit cette transaction est bel et bien celui qui a créé l'objet.

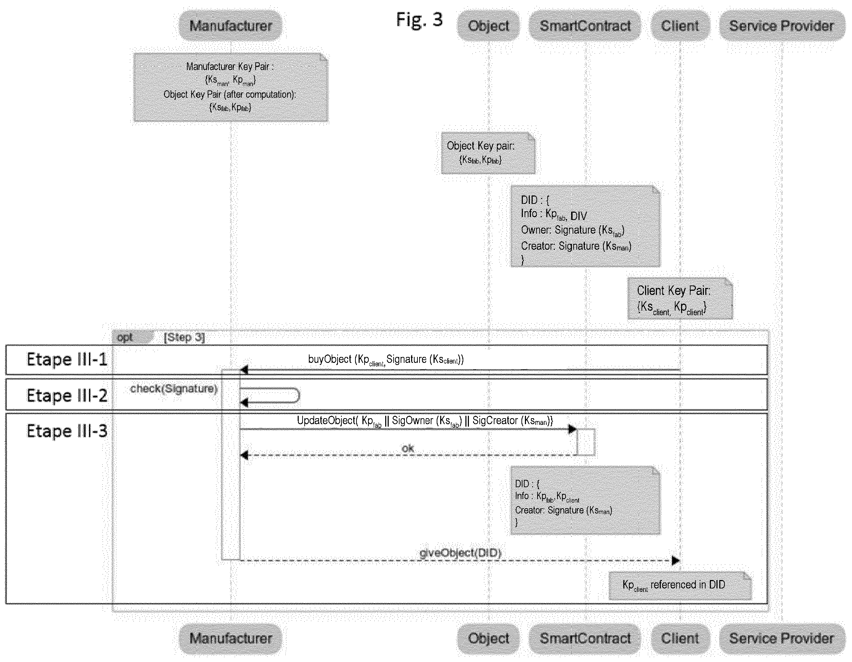

**La** figure 3 illustre un exemple de mode de réalisation non limitatif de la présente invention, dans lequel sont représentées les étapes c) et d) correspondant aux étapes réalisées, lorsqu'un Client achète l'objet audit Fabricant (Etape III-1). La preuve d'appartenance de l'objet se fait intrinsèquement car le propriétaire est le seul à posséder la clé privée associée à la clé publique référencée. Lors de l'échange entre le Client et le Fabricant, le client prouve qu'il est bien le propriétaire de la clé publique en insérant sa signature (Etape III-2). La fourniture des données par le Fabricant au client par un mécanisme « off-chain » n'est pas représenté. Le Fabricant met à jour le référentiel commun en publiant la clé publique associée au Client Kp_{client} et création de l'association dans ladite base de donnée entre le DID et le DIV et Kp_{client} (Etape III-3).

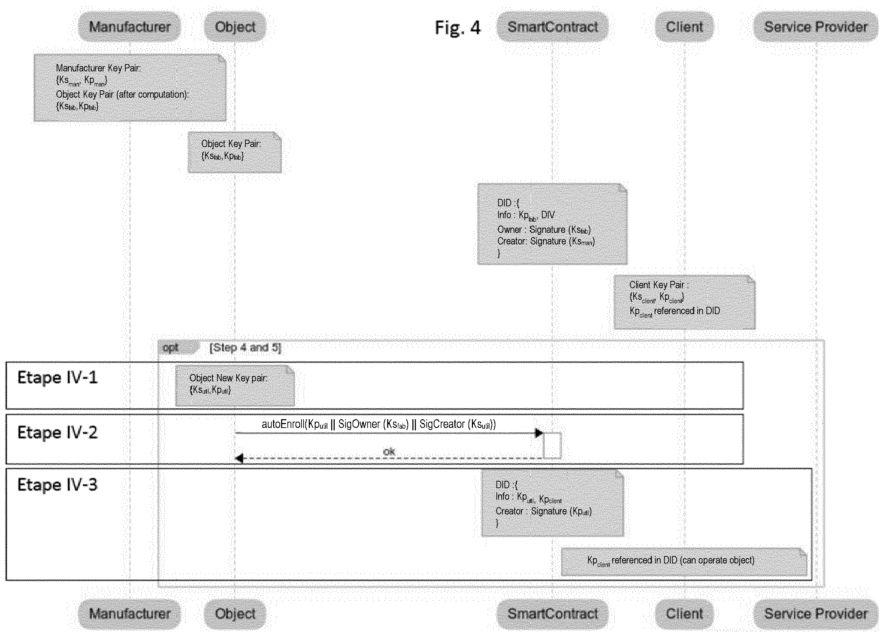

Enfin, la figure 4 illustre un exemple de mode de réalisation non limitatif de la présente invention, dans lequel sont représentées les étapes e), f), et g) correspondant aux étapes réalisées lorsque l'objet est allumé pour la première fois, et s'auto-enrôle. En effet, une fois allumé, l'objet réalise la génération d'une bi-clé d'utilisation (Etape IV-1). L'objet s'auto-enrôle ensuite par la publication de sa clé publique d'utilisation (Kpᵤₜᵢₗ) dans un message d'enrôlement (Etape IV-2), le message d'enrôlement étant signée avec la clé privée de fabrication (Ks_{fab}) que seul l'Objet possède. Enfin, la publication (Etape IV-3) pour mise à jour de la chaine de blocs de la clé publique d'utilisation associée au DID de l'objet (et donc remplacement de la clé publique de fabrication associée au DID de l'objet par ladite clé publique d'utilisation).

Le système comprend ainsi un gestionnaire d'identités sécurisées basé sur une chaine de blocs dans laquelle sont publiées les identités ou le processus permettant de retrouver ces identités. Les nœuds du registre partagé maintiennent ainsi une chaine de blocs et, par extrapolation, le gestionnaire d'identités.

**On** comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention n'est définie que par les revendications.

## Revendications

1. Procédé de communication pour la gestion sécurisée de clés et d'identités d'un Objet fabriqué par un Fabricant possédant une bi-clé clé publique Kp, clé privée ou secrète Ks de Fabricant (Ksₘₐₙ, Kpₘₐₙ) et un client possédant une bi-clé Client (Ks_{client}, Kp_{client}), **caractérisé en ce que** la gestion se fait au moins partiellement sur une base de données décentralisée de chaines de blocs, et que le procédé comprend les étapes suivantes :
a) Génération par le Fabricant d'une bi-clé de fabrication (Ks_{fab},Kp_{fab}) obtenue via une fonction de dérivation de clé, la bi-clé de fabrication étant enregistrée dans l'objet, et composé d'une clé privée de fabrication (Ks_{fab}) issue de la dérivation de la clé privée du Fabricant (Ksₘₐₙ) avec un diversifiant, DIV, et d'une clé publique de fabrication Kp_{fab} complémentaire de ladite clé privée (Ks_{fab}), la clé publique (Kp_{fab}) étant issue de la dérivation de la clé publique du Fabricant (Kpₘₐₙ) avec le même diversifiant DIV;
b) Publication et enregistrement dans la chaine de blocs d'un identifiant décentralisé, DID, comprenant la clé publique de fabrication Kp_{fab} de l'objet, et préférentiellement du diversifiant DIV utilisé pour obtenir la clé publique Kp_{fab} de l'objet : *association DID-DIV;* et,
lorsqu'un Client achète l'objet audit Fabricant, le procédé comprend les étapes d'initialisation suivantes :
c) Fourniture par le Fabricant de l'objet, de l'identifiant de l'objet DID, comprenant la clé publique de fabrication Kp_{fab}, au client, préférentiellement par un mécanisme, en dehors de la chaine de blocs, dit « off-chain »
d) Mise à jour de la chaine de blocs par publication de la clé publique du client Kp_{client} et création de l'association dans ladite base de donnée entre le DID et le DIV et Kp_{client}; et,
lorsque l'objet est allumé pour la première fois, l'objet s'enrôle selon les étapes suivantes :
e) Génération d'une bi-clé d'utilisation (Ksᵤₜᵢₗ, Kpᵤₜᵢₗ), la génération étant de préférence réalisée à partir d'un aléa généré par l'objet lui-même;
f) Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab});
g) Remplacement dans la chaine de blocs de la clé publique de fabrication associée au DID de l'objet par la clé publique d'utilisation associée au DID de l'objet.

2. Procédé de communication selon la revendication 1, dans lequel le générateur de bi-clés repose sur des portemonnaies de clé hiérarchiques (Hierarchical Key Wallets) pour fournir les bi-clés de fabrication uniques qui sont diversifiées à partir de la bi-clé du Fabricant.

3. Procédé de communication selon la revendication 1, dans lequel l'objet est transféré d'un propriétaire à un autre en reprenant les étapes d à g.

4. Procédé de communication selon l'une quelconque des revendications précédentes, qui comprend en outre une étape préalable à la génération de bi-clés de fabrication par le Fabricant, dans laquelle ledit Fabricant enregistre son identifiant de Fabricant dans la base de données de chaines de blocs et publie leur clé publique de Fabricant (Kpₘₐₙ) en l'associant à l'identifiant du Fabricant.

5. Procédé de communication selon l'une quelconque des revendications précédentes, dans lequel le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

6. Procédé de communication selon l'une quelconque des revendications précédentes, dans lequel un système de Preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

7. Système de gestion d'identités sécurisées basé sur une chaine de bloc et configuré pour réaliser les étapes du procédé selon une quelconque des revendications 1 à 6, le système comprenant au moins :
- un Fabricant, utilisant un système de diversification de clé à partir de diversifiants générés par un générateur de diversifiants,
- un système de connexion à une chaine de blocs,
- un système d'attribution à chaque objet sorti de fabrication d'un identifiant et
- un arrangement matériel et logiciel pour envoyer au serveur de chaine de blocs un message de publication et d'enregistrement de la clé publique du client Kp_{client} et de *l'association dans ladite base de donnée entre le DID et le DIV.*

8. Système de gestion d'identités sécurisées basé sur une chaine de bloc et configuré pour réaliser les étapes du procédé selon une quelconque des revendications 1 à 6, le système comprenant au moins :
- Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
- Génération d'une bi-clé d'utilisation (Ksᵤₜᵢₗ, Kpᵤₜᵢₗ) , la génération étant réalisée de préférence à partir d'un aléa,
- Auto-enrôlement grâce à la Bi-clé de fabrication par publication par l'objet de sa clé publique d'utilisation (Kpᵤₜᵢₗ) dans un message d'enrôlement, et signature du message d'enrôlement avec la clé privée de fabrication (Ks_{fab})
- Remplacement dans la chaine de blocs de la clé publique de fabrication par la clé publique d'utilisation

## Patentansprüche

1. Kommunikationsverfahren für das sichere Verwalten von Schlüsseln und Identitäten eines von einem Hersteller hergestellten Objekts, der über ein Schlüsselpaar aus einem öffentlichen Schlüssel Kp und einem privaten oder geheimen Schlüssel des Herstellers (Ksₘₐₙ, Kpₘₐₙ) verfügt, und eines Kunden, der über ein Kunden-Schlüsselpaar (Ks_{client}, Kp_{client}) verfügt,
**dadurch gekennzeichnet, dass** das Verwalten mindestens teilweise in einer dezentralen Blockchain-Datenbank erfolgt und das Verfahren die folgenden Schritte umfasst:
a) Generieren eines Herstellerschlüsselpaares (Ks_{fab}, Kp_{fab}) durch den Hersteller, das über eine Schlüsselableitungsfunktion erhalten wird, wobei das Herstellerschlüsselpaar in dem Objekt gespeichert ist und aus einem privaten Herstellerschlüssel (Ks_{fab}), der aus der Ableitung des privaten Schlüssels des Herstellers (Ksₘₐₙ) mit einem Diversifikator, DIV, hervorgeht, und einem zu dem privaten Schlüssel (Ks_{fab}) komplementären öffentlichen Herstellerschlüssel Kp_{fab} besteht, wobei der öffentliche Schlüssel (Kp_{fab}) aus der Ableitung des öffentlichen Schlüssels des Herstellers (Kpₘₐₙ) mit demselben Diversifikator DIV hervorgeht;
b) Veröffentlichen und Speichern einer dezentralen Kennung, DID, die den öffentlichen Herstellerschlüssel Kp_{fab} des Objekts umfasst, und vorzugsweise des Diversifikators DIV, der zum Erhalten des öffentlichen Schlüssels Kp_{fab} des Objekts verwendet wird, in der Blockchain: *DID-DIV-Verknüpfung,* und wobei, wenn ein Kunde das Objekt von dem Hersteller kauft, das Verfahren die folgenden Initialisierungsschritte umfasst:
c) Bereitstellen der Objektkennung DID, die den öffentlichen Herstellerschlüssel Kp_{fab} umfasst, durch den Hersteller des Objekts an den Kunden, vorzugsweise durch einen Mechanismus außerhalb der Blockchain, genannt "Off-Chain",
d) Aktualisieren der Blockchain durch Veröffentlichen des öffentlichen Schlüssels des Kunden Kp_{client} und Erstellen der Verknüpfung in der Datenbank zwischen der DID und dem DIV und Kp_{client}; und wobei, wenn das Objekt zum ersten Mal eingeschaltet wird, das Objekt sich selbst gemäß den folgenden Schritten registriert:
e) Generieren eines Nutzungsschlüsselpaares (Ksᵤₜᵢₗ, Kpᵤₜᵢₗ), wobei das Generieren bevorzugt anhand eines von dem Objekt selbst generierten Zufallswerts erfolgt;
f) Selbstregistrierung mit dem Herstellerschlüsselpaar durch Veröffentlichen des öffentlichen Nutzungsschlüssels (Kpᵤₜᵢₗ) durch das Objekt in einer Registrierungsnachricht und Signieren der Registrierungsnachricht mit dem privaten Herstellerschlüssel (Ks_{fab});
g) Ersetzen des mit der DID des Objekts verknüpften öffentlichen Herstellerschlüssels in der Blockchain durch den mit der DID des Objekts verknüpften öffentlichen Nutzungsschlüssel.

2. Kommunikationsverfahren nach Anspruch 1, wobei der Schlüsselpaargenerator auf hierarchischen Schlüssel-Brieftaschen (Hierarchical Key Wallets) basiert, um die eindeutigen Herstellerschlüsselpaare bereitzustellen, die vom Schlüsselpaar des Herstellers ausgehend diversifiziert werden.

3. Kommunikationsverfahren nach Anspruch 1, wobei das Objekt durch Wiederholen der Schritte d bis g von einem Besitzer auf einen anderen übertragen wird.

4. Kommunikationsverfahren nach einem der vorstehenden Ansprüche, ferner umfassend einen Schritt vor dem Generieren von Herstellerschlüsselpaaren durch den Hersteller, in dem der Hersteller seine Herstellerkennung in der Blockchain-Datenbank speichert und seinen öffentlichen Herstellerschlüssel (Kpₘₐₙ) durch Verknüpfen mit der Herstellerkennung veröffentlicht.

5. Kommunikationsverfahren nach einem der vorstehenden Ansprüche, wobei die gemeinsame Nutzung oder das Verwalten von Rechten an dem Objekt durch den Eigentümer des Objekts mittels überprüfbarer Anmeldeinformationen (Verifiable Credentials) erfolgt, die vorzugsweise von Dienstanbietern (Service Providers) angefordert und von dem Eigentümer validiert werden.

6. Kommunikationsverfahren nach einem der vorstehenden Ansprüche, wobei in einem Smart Contract ein System mit Null-Wissen-Beweis (Zero Knowledge Proof-, ZKP-System) implementiert wird, um Informationen bereitzustellen, ohne deren Werte preiszugeben.

7. System zum Verwalten sicherer Identitäten, das auf einer Blockchain basiert und dazu konfiguriert ist, die Schritte des Verfahrens nach einem der Ansprüche 1 bis 6 auszuführen, wobei das System mindestens umfasst:
- einen Hersteller, der ein System zur Schlüsseldiversifizierung ausgehend von von einem Diversifikatorengenerator generierten Diversifikatoren verwendet,
- ein System zum Verbinden mit einer Blockchain,
- ein System zum Zuweisen einer Kennung zu jedem die Herstellung verlassenden Objekt und
- eine Hardware- und Softwareanordnung zum Senden einer Nachricht zur Veröffentlichung und Speicherung des öffentlichen Schlüssels des Kunden Kp_{client} und zur Verknüpfung in der Datenbank zwischen der DID und dem DIV an den Server der Blockchain.

8. System zum Verwalten sicherer Identitäten, das auf einer Blockchain basiert und dazu konfiguriert ist, die Schritte des Verfahrens nach einem der Ansprüche 1 bis 6 durchzuführen, wobei das System mindestens umfasst:
- ein Objekt, das mit Rechenmitteln und Mitteln zum Speichern eines Programms und von Daten ausgestattet ist, die ausreichen, um die folgenden Operationen auszuführen: das Objekt registriert sich, wenn das Objekt zum ersten Mal eingeschaltet wird, gemäß den folgenden Schritten:
- Generieren eines Nutzungsschlüsselpaares (Ksᵤₜᵢₗ, Kpᵤₜᵢₗ), wobei das Generieren bevorzugt anhand eines Zufallswerts ausgeführt wird,
- Selbstregistrierung mit dem Herstellerschlüsselpaar durch Veröffentlichen des öffentlichen Nutzungsschlüssels (Kpᵤₜᵢₗ) durch das Objekt in einer Registrierungsnachricht und Signieren der Registrierungsnachricht mit dem privaten Herstellerschlüssel (Ks_{fab}),
- Ersetzen des öffentlichen Herstellerschlüssels in der Blockchain durch den öffentlichen Nutzungsschlüssel.

## Claims

1. A communication method for the secure management of keys and identities of an Object manufactured by a Manufacturer having a Manufacturer key pair of public key Kp, and private or secret key Ks (Ksₘₐₙ, Kpₘₐₙ), and a client having a Client key pair (Ks_{client}, Kp_{client}), **characterized in that** the management is carried out at least partially on a decentralized blockchain database, and **in that** the method comprises the following steps:
a) Generation, by the Manufacturer, of a manufacturing key pair (Ks_{fab},Kp_{fab}) obtained via a key derivation function, the manufacturing key pair being recorded in the object, and composed of a private manufacturing key (Ks_{fab}) resulting from the derivation of the private Manufacturer key (Ksₘₐₙ) with a diversifier, DIV, and of a public manufacturing key Kp_{fab}, complementary to said private key (Ks_{fab}), the public key (Kp_{fab}) resulting from the derivation of the public Manufacturer key (Kpₘₐₙ) with the same diversifier DIV;
b) Publication and recording, in the blockchain, of a decentralized Identifier, DID, comprising the public manufacturing key Kp_{fab} of the object and preferentially of the diversifier DIV used to obtain the public key Kp_{fab} of the object: DID-DIV association; and
when a Client purchases the object from said Manufacturer, the method comprises the following initialization steps:
c) Providing, by the Manufacturer of the object, of the identifier of the object DID, comprising the public manufacturing key Kp_{fab} to the client, preferentially by a mechanism outside of the blockchain, referred to as "off-chain"
d) Updating the blockchain by publication of the public client key Kp_{client} and creation of the association, in said database, between the DID and the DIV and Kp_{client}; and
when the object is switched on for the first time, the object enrolls itself according to the following steps:
e) Generation of an utilization key pair (Ksᵤₜᵢₗ, Kpᵤₜᵢₗ), the generation preferably being carried out from an unknown generated by the object itself;
f) Auto-enrollment using the manufacturing Key pair by publication, by the object, of its public utilization key (Kpᵤₜᵢₗ) in an enrollment message, and signing of the enrollment message with the private manufacturing key (Ks_{fab});
g) Replacement, in the blockchain, of the public manufacturing key associated with the DID of the object with the public utilization key associated with the DID of the object.

2. The communication method according to claim 1, wherein the key pair generator is based on Hierarchical Key Wallets to provide the unique manufacturing key pairs which are diversified based on the Manufacturer key pair.

3. The communication method according to claim 1, wherein the object is transferred from one owner to another by reiterating steps d to g.

4. The communication method according to any one of the preceding claims, which further comprises a step prior to the generation of the manufacturing key pairs by the Manufacturer, wherein said Manufacturer records their Manufacturer identifier in the blockchain database and publishes their public Manufacturer key (Kpₘₐₙ) by associating it with the Manufacturer identifier.

5. The communication method according to any one of the preceding claims, wherein sharing or managing the rights to the object is performed by the owner of the object by means of Verifiable Credentials, preferentially requested by the Service Providers and validated by the owner.

6. The communication method according to any one of the preceding claims, wherein a Zero Knowledge Proof (ZKP) system is established within a Smart Contract, in order to give information without revealing the values thereof.

7. A system for managing secure identities based on a blockchain and configured to carry out the steps of the method according to any one of claims 1 to 6, the system comprising at least:
- a Manufacturer, using a key diversification system based on diversifiers generated by a diversifier generator,
- a connection system for connecting to a blockchain,
- an attribution system for attributing an identifier to each object leaving manufacturing, and
- a hardware and software arrangement for sending, to the blockchain server, a message of publication and of recording of the public client key Kp_{client} and of the association in said database between the DID and the DIV.

8. A system for managing secure identities based on a blockchain and configured to carry out the steps of the method according to any one of claims 1 to 6, the system comprising at least:
- An object provided with computation means and storing means for storing a program and sufficient data to carry out the following operations: when the object is switched on for the first time, the object enrolls itself according to the following steps:
- Generation of an utilization key pair (Ksᵤₜᵢₗ, Kpᵤₜᵢₗ), the generation preferably being carried out from an unknown,
- Auto-enrollment using the manufacturing Key pair by publication, by the object, of its public utilization key (Kpᵤₜᵢₗ) in an enrollment message, and signing of the enrollment message with the private manufacturing key (Ks_{fab})
- Replacement, in the blockchain, of the public manufacturing key with the public utilization key.
